# EUROPEAN PATENT SPECIFICATION

(11) **EP 2 930 771 B1**
(45) Date of publication and mention of the grant of the patent: **25.12.2019**
(21) Application number: 15159779.6
(22) Date of filing: 19.03.2015
(51) Int. Cl.: B60L 3/00, B60L 58/12, B60L 58/15, B60L 50/64, H01M 2/34, B60L 3/04, H01M 10/0525, H02J 7/00

(54) **RECHARGEABLE BATTERY**
WIEDERAUFLADBARE BATTERIE
BATTERIE RECHARGEABLE

(30) Priority: 07.04.2014 KR 20140041288
(43) Date of publication of application: 14.10.2015
(73) Proprietor: Samsung SDI Co., Ltd., Yongin-si, Gyeonggi-do (KR)
(72) Inventor: Kim, Duk-Jung, Yongin-si, Gyeonggi-do (KR)
(74) Representative: Ludwig, Ingo

(56) References cited:
- EP-A1- 2 672 548
- EP-A2- 2 448 081
- WO-A1-2012/171917
- WO-A1-2013/084665
- US-A1- 2007 054 157

## Description

### BACKGROUND

### 1. Field

The present invention relates to a rechargeable battery, and more particularly, to a rechargeable battery for preventing abnormal overcharge.

### 2. Description of the Related Art

In general, a rechargeable battery is capable of being repeatedly charged and discharged, and e.g. a nickel-metal hydride (Ni-MH) battery, a lithium (Li) ion battery, etc. are used as the rechargeable battery.

The rechargeable battery is used as a power source for a mobile device, an electric vehicle, a hybrid vehicle, an electrical device, etc., and can be used in various ways depending on device types to which it is applicable.

A low-capacity rechargeable battery is used in small portable electronic devices such as mobile phones, notebook computers, and camcorders, while a high-capacity rechargeable battery is widely used as a power source for driving a motor of a hybrid vehicle, etc.

The rechargeable battery may be used in small electronic devices as a single cell battery or in motor-driving power sources, etc., as a pack in which a plurality of cells are electrically connected.

When such a rechargeable battery is abnormally overcharged, an increased voltage inside of the rechargeable battery generates gas and the generated gas increases internal pressure, such that a case of the rechargeable battery may be expanded to explode.

Accordingly, an apparatus for protecting against abnormal overcharge of the rechargeable battery is required.

The above information disclosed in this Background section is only for enhancement of understanding of the background of the invention and therefore it may contain information that does not form the prior art that is already known to a person of ordinary skill in the art.

WO 2013/084665 A1, EP 2 672 548 A1, WO 2012/171917 A1, and US 2007/054157 A1 are relevant prior art. EP 2 448 081 A2 discloses a battery having the features of the preamble of claim 1.

### SUMMARY

An exemplary embodiment provides a rechargeable battery for protecting against abnormal overcharge of the rechargeable battery as defined in claim 1 .

Further embodiments of the invention are defined in the dependent claims.

The exemplary embodiment uses the element, e.g. the first short-circuit plate, that is deformed by the internal pressure when the rechargeable battery is abnormally overcharged and that bypasses the current between the unit cell at the highest voltage side of the plurality of unit cells and the unit cell at the lowest voltage side of the plurality of unit cells so as to activate and e.g. melt and/or cut off the pack fuse, thereby physically cutting off the current supplied from the charger.

In addition, in the exemplary embodiment, the element for preventing abnormal overcharge is disposed per battery module and thus the element is not required to be disposed in every cell, thereby securing a design margin and robustness.

### BRIEF DESCRIPTION OF THE DRAWINGS

FIG. 1 is a circuit diagram of a rechargeable battery protection apparatus according to an exemplary embodiment.
FIG. 2 is a drawing showing a schematic configuration of the rechargeable battery protection apparatus according to the exemplary embodiment.
FIG. 3 is a drawing showing a detailed configuration of a first connector illustrated in FIG. 2.
FIGS. 4 and 5 are drawings to describe a driving mechanism of the rechargeable battery protection apparatus.

### DETAILED DESCRIPTION OF THE EMBODIMENTS

In the following detailed description, only certain exemplary embodiments of the present invention have been shown and described, simply by way of illustration.

Like reference numerals designate like elements throughout the specification.

Throughout this specification and the claims that follow, when it is described that an element is "coupled" to another element, the element may be "directly coupled" to the other element or "electrically coupled" to the other element through a third element. Hence, the element may directly or indirectly be connected to another element in an electrically conductive manner.

The present invention will be described more fully hereinafter with reference to the accompanying drawings, in which exemplary embodiments of the invention may be easily embodied by those skilled in the art.

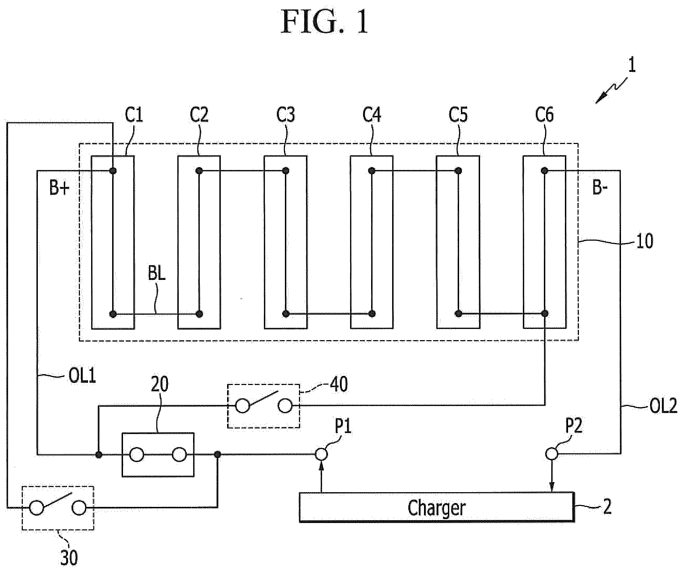

FIG. 1 is a circuit diagram of a rechargeable battery protection apparatus according to an exemplary embodiment.

Referring to FIG. 1, the rechargeable battery protection apparatus 1 according to the exemplary embodiment includes a battery module 10, a pack fuse 20, and first and second connectors 30 and 40.

A positive terminal B+ and a negative terminal B- are connected to a charger 2 through external power lines OL1 and OL2 and external ports P1 and P2 in case the battery is to be charged.

In addition, the battery module 10 is connected to an external load (not shown) through the external ports P1 and P2 to be discharged.

The battery module 10 according to the exemplary embodiment can be applicable to a vehicle, an electric bike, etc.

The battery module 10 exemplarily includes first to sixth unit cells C1 to C6, wherein the sixth unit cell may be the another one of the unit cells.

The unit cells C1 to C6 are electrically connected to each other in series between the positive and negative terminals B+ and B-.

The number of unit cells forming the battery module 10 is exemplarily set to six, but the invention is not limited thereto.

The pack fuse 20 is formed on a high current path between the battery module 10 and the charger 2.

The pack fuse 20 is melted to cut off the high current path if current between the battery module 10 and the charger 2 exceeds a predetermined level.

For this purpose, the pack fuse 20 includes one end connected to a positive terminal of the first unit cell C1, and the other end connected to the external port P1.

In addition, the pack fuse 20 according to the exemplary embodiment may be melted to cut off the high current path if a short-circuit current flows through the first and second connectors 30 and 40 when the battery module 10 is abnormally overcharged.

The first connector 30 is formed between the positive terminal of the first unit cell C1 of the first to sixth or another one of the unit cells C1 to C6 and the other end of the pack fuse 20.

The first connector 30 is adapted to be physically deformed to form an electrically conductive connection like a wire when the battery module 10 is abnormally overcharged and thus internal pressure increases.

The second connector 40 is formed between a positive terminal of the sixth or another one unit cell C6 of the unit cells C1 to C6 and one end of the pack fuse 20.

The second connector 40 is physically deformed to form an electrical conductor or connection, e.g. an electrically conductive wire when the battery module 10 is abnormally overcharged and thus internal pressure increases.

A configuration in which the first and second connectors 30 and 40 are respectively connected to the positive terminals of the unit cells C1 and C6 at the highest and lowest voltage sides among the first to sixth or another one unit cells C1 to C6, is exemplarily described, but the present invention is not limited thereto, and positions of the first and second connectors 30 and 40 may be changed depending on an amount of the short-circuit current that causes the pack fuse 20 to be melted and cut off.

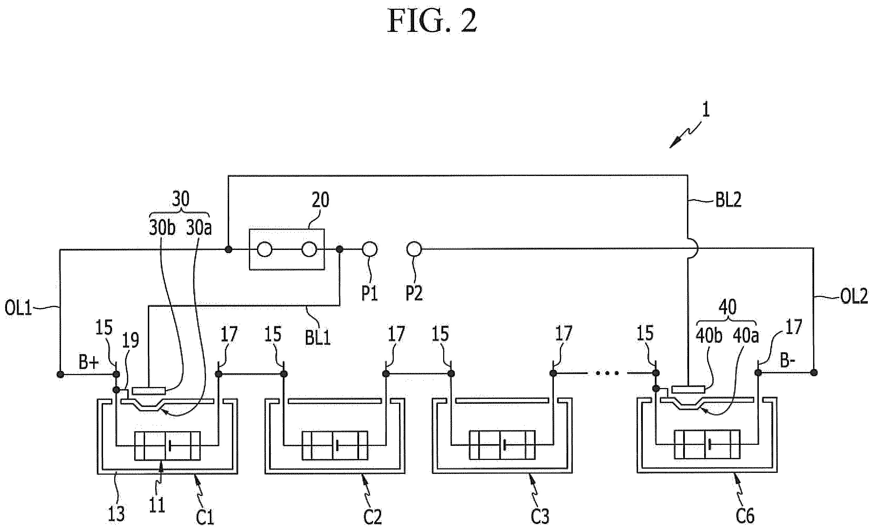

FIG. 2 is a drawing showing a schematic configuration of the rechargeable battery protection apparatus according to the exemplary embodiment.

Referring to FIG. 2, the rechargeable battery protection apparatus 1 according to the exemplary embodiment includes the battery module 10, the pack fuse 20, and the first and second connectors 30 and 40.

The battery module 10 exemplarily includes the first to sixth or another one unit cells C1 to C6 that may be arranged in one direction at a predetermined interval.

In this case, each of the unit cells C1 to C6 includes an electrode assembly 11, a case 13, a positive terminal 15, and a negative terminal 17.

In this case, each of the unit cells C1 to C6 is exemplarily described as a prismatic lithium ion rechargeable battery.

The exemplary embodiment is not limited thereto, but it can be applicable to various types of batteries, for example lithium polymer batteries or a cylindrical batteries.

The electrode assembly 11 includes a structure in which negative and positive electrode plates have a separator interposed therebetween such that they are disposed at opposite sides thereof.

The case 13 accommodates the electrode assembly 11, and may be formed of a metal such as aluminum, stainless steel, etc.

The positive and negative terminals 15 and 17 may be respectively formed in a bolt-like shape formed with a thread at an external circumferential surface thereof.

The positive terminals 15 of the second to sixth or another one unit cells C2 to C6 are respectively connected to the negative terminals 17 of the adjacent first to fifth unit cells C1 to C5.

In this case, the positive terminal 15 of the first or one unit cell C1 is electrically connected to the positive terminal B+ of the battery module 10, and the negative terminal 17 of the sixth or another one unit cell C6 is electrically connected to the negative terminal B- of the battery module 10.

The first connector 30 is disposed above the first or one unit cell C1, and includes a first short-circuit plate 30a and a second short-circuit plate 30b.

In this case, the first short-circuit plate 30a is convexly formed toward the inside of the case 13, and is adapted to be deformed by the internal pressure to physically contact the second short-circuit plate 30b in case the internal pressure exceeds a predetermined pressure level.

The first short-circuit plate 30a is electrically connected to the positive terminal 15 of the first or one unit cell C1 through a connecting tab 19.

The connecting tab 19 can extend from the positive terminal 15 of the first or one unit cell C1.

The second short-circuit plate 30b is disposed to face the first short-circuit plate 30a, and is formed to be spaced apart from the undeformed first short-circuit plate 30a by a predetermined interval.

The second short-circuit plate 30b is electrically connected to the other end of the pack fuse 20 through an electrical conductor of connection, e.g. an, e.g. a wire BL1.

The second connector 40 is disposed above the sixth or another one unit cell C6, and includes a first short-circuit plate 40a and a second short-circuit plate 40b.

In this case, the first short-circuit plate 40a is convexly formed toward the inside of the case 13, and can be deformed by the internal pressure exceeding the predetermined pressure level and can physically contact the second short-circuit plate 40b.

The first short-circuit plate 40a is electrically connected to the positive terminal 15 of the sixth or another one unit cell C6 through a connecting tab 21.

The connecting tab 21 may extend from the positive terminal 15 of the sixth or another one unit cell C6.

The second short-circuit plate 40b is disposed to face the first short-circuit plate 40a, and is formed to be spaced apart from the undeformed first short-circuit plate 40a by a predetermined interval.

The second short-circuit plate 40b is electrically connected to one end of the pack fuse 20 through an electrical conductor or connection, e.g. a wire BL2.

In the exemplary embodiment, a configuration in which each of the second short-circuit plates 30b and 40b of the first and second connectors 30 and 40 is disposed above each of the cases 13 of the first and sixth or another one unit cells C1 and C6 is exemplarily described. However, the exemplary embodiment is not limited thereto, and a configuration in which each of the second short-circuit plates 30b and 40b of the first and second connectors 30 and 40 is disposed above a case of the battery module 10 may be possible.

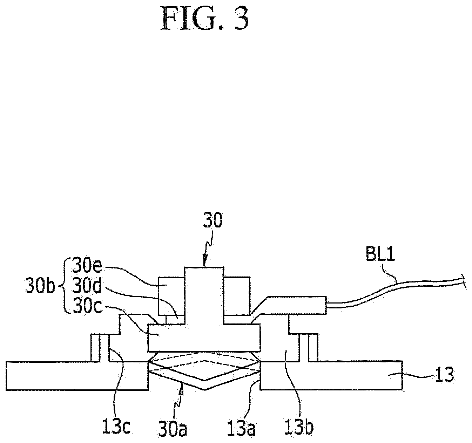

FIG. 3 is a drawing showing a detailed configuration of a first connector 30 illustrated in FIG. 2.

Referring to FIG. 3, the first connector 30 according to the exemplary embodiment includes the first and second short-circuit plates 30a and 30b.

The first short-circuit plate 30a is formed above a short-circuit hole 13a of the case 13.

The first short-circuit plate 30a may be integrally formed with the case 13.

The second short-circuit plate 30b is disposed to be spaced apart from the first short-circuit plate 30a above the shot-circuit hole 13a of the case 13.

In this case, the second short-circuit plate 30b includes a bolt 30c, a ring terminal 30d, and a nut 30e.

The bolt 30c is partially buried or embedded in an insulator 13b by e.g. insert molding to be fixed to the case 13.

The insulator 13b is formed on the case 13.

In this case, the insulator 13b may be formed such that it is fixed to the case 13, e.g. by a fixing tab 13c that protrudes from the case 13.

The ring terminal 30d is combined to the bolt 30c, and is electrically connected, through an electrical conductor or connection, e.g. a wire, that can be compressively connected to its end portion, to the other end of the pack fuse 20.

The nut 30e is combined to the bolt 30c so as to fix the ring terminal 30d.

When the battery module 10 is abnormally overcharged, the first connector 30 having the configuration described above is expanded by the internal pressure that rises due to the abnormal overcharge to inversely deform the first short-circuit plate 30a.

For example, the first short-circuit plate 30a may have a shape illustrated by a dotted line in FIG. 3.

As a result, the first short-circuit plate 30a physically contacts the bolt 30c, and the positive terminal 15 of the first or one unit cell C1 is electrically connected to the other end of the pack fuse 20 through an electrical conductor or connection, e.g. the wire of the ring terminal 30d.

As the second connector 40 according to the exemplary embodiment has the same configuration as the first connector 30, a detailed description and illustration will be omitted.

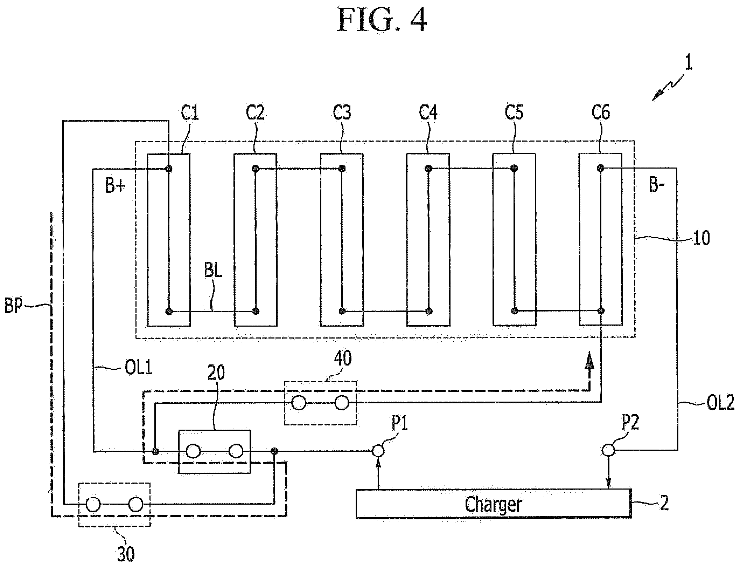

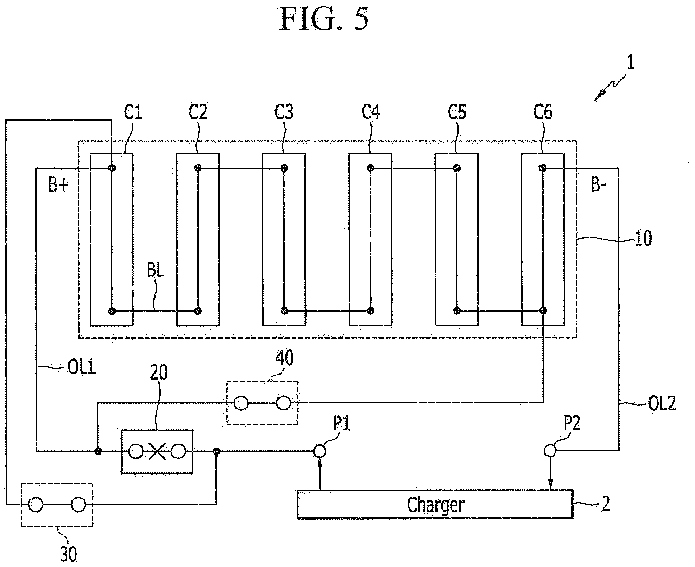

FIGS. 4 and 5 are drawings to describe a driving mechanism of the rechargeable battery protection apparatus, illustrating a state in which the battery module 10 is abnormally overcharged.

Referring to FIG. 4, the battery module 10 is connected to the charger 2 and is then charged.

In this case, when the battery module 10 is abnormally overcharged and thus the internal pressure increases, the first and second connectors 30 and 40 are physically deformed to form electrical conductive conductors or connections, e.g. an, e.g. wires.

Next, the positive terminal of the first or one unit cell C1 is electrically connected to the other end of the pack fuse 20 through the first connector 30, and the positive terminal of the sixth or another one unit cell C6 is electrically connected to one end of the pack fuse 20 through the second connector 40.

Thus, the positive terminal of the first or one unit cell C1 is short-circuited with the negative terminal of the fifth unit cell C5.

That is, a bypass path BP is formed to bypass a current flowing through the first to fifth unit cells C1 to C5 to the pack fuse 20 through the first and second connectors 30 and 40.

Next, the short-circuit current flows through the positive terminal of the first or one unit cell C1, the pack fuse 20, and the negative terminal of the fifth unit cell C5, and the pack fuse 20 is melted and cut off by the short-circuit current, as shown in FIG. 5.

Thus, the high current path between the battery module 10 and the charger 2 is cut off to stop charging of the battery module 10.

That is, the exemplary embodiment, in an abnormal condition under which a conventional battery management system (BMS) alone cannot control overcharge, the short-circuit current corresponding to a voltage difference between the unit cell C1 at the highest voltage side and the unit cell C6 at the lowest voltage side is induced by the physically deformed first and second connectors 30 and 40.

Thus, an electrical connection between the battery module 10 and the charger 2 is disconnected, so the battery module 10 may be prevented from being abnormally overcharged any further.

In addition, in order to prevent the overcharge in general, when a current interruption device (CID) is used to cut off each current path of a plurality of unit cells or an overcharge safety device (OSD) is used to form an electrically conductive conductor or connection, e.g. a wire, that bypasses the current path, a number of parts of the unit cells is increased and thus robustness is vulnerable.

In addition, when the OSD is applied to the unit cell, a high current must be induced to melt and cut off an additional fuse that is installed in each unit cell, so performance deterioration occurs due to trade-offs between the OSD and the fuse.

In contrast, the exemplary embodiment, as the electrically conductive electrical conductors or connections, e.g. a wires, are formed from the two unit cells C1 and C6 of the plurality of unit cells inside the battery module 10, design margin and robustness of the unit cell can be secured and mechanical/structural interference with other system does not occur.

In the context of the description of the invention, the term disposed above is preferably to be interpreted as being arranged at a distance or behind something in a predetermined direction. The direction may be a direction that is perpendicular to the first and/or the second short circuit plate (30a, 40a, 30b, 40b). In this direction, a projection of the first short circuit plate (30a, 40a) may overlap the second short circuit plate (30b, 40b).

## Claims

1. A rechargeable battery comprising:
a battery module (10) configured to include a plurality of unit cells (C1 to C6) connected in series between a positive terminal (B+) and a negative terminal (B-), a first external port (P1) connected to the positive terminal (B+), and a second external port (P2) connected to the negative terminal (B-); and
a pack fuse (20) formed on a high current path between the first external port (P1) and the positive terminal (B+);
**characterized in that**
the battery includes a first switch (30) to electrically interconnect a positive terminal of one unit cell (C1) and one end of the pack fuse (20), and a second switch (40) to electrically connect the other end of the pack fuse (20) and a positive terminal of the another one unit cell (C6), wherein
the switches (30, 40) form a bypass path (BP) that bypasses a current between the one unit cell (C1) and the another one unit cell (C6) among the plurality of unit cells (C1 to C6) via the pack fuse (20) depending on internal pressure of the battery module (10), wherein
each of the plurality of unit cells (C1 to C6) includes an electrode assembly (11) including the positive and negative terminals (15, 17), and a case (13) for accommodating the electrode assembly (11), wherein
each of the first and second switches (30, 40) includes a first short-circuit plate (30a, 40a) that extends from the case (13) to be convexly formed toward the inside of the case (13), and a second short-circuit plate (30b, 40b) that is disposed facing the first short-circuit plate (30a, 40a) and spaced apart from the first short-circuit plate (30a, 40a), and wherein
the first short-circuit plate (30a, 40a) is adapted to be deformed depending on the internal pressure to physically contact the second short-circuit plate (30b, 40b).

2. The rechargeable battery of claim 1, wherein the switches (30, 40) are adapted to be physically deformed depending on the internal pressure of the battery module (10) to form an electrical connection between each of the one and the another one unit cell (C1, C6) via the pack fuse (20).

3. The rechargeable battery of claim 1 or 2, wherein each of the one and another one unit cells (C1, C6) includes a connecting tab (19, 21) for electrically connecting the case (13) and the positive terminal (15).

4. The rechargeable battery of any of claims 1 to 3, wherein the battery includes a first connector (30a) that is formed on the one unit cell (C1), and a second connector (40) that is formed on the another one unit cell (C2).

## Patentansprüche

1. Eine wiederaufladbare Batterie, aufweisend:
ein Batteriemodul (10), das konfiguriert ist, um eine Vielzahl von Einheitszellen (C1 bis C6), die zwischen einen positiven Anschluss (B+) und einen negativen Anschluss (B-) in Reihe geschaltet sind, einen ersten externen Port (P1), der mit dem positiven Anschluss (B+) verbunden ist, und einen zweiten externen Port (P2), der mit dem negativen Anschluss (B-) verbunden ist, aufzuweisen; und
eine Packsicherung (20), die auf einem Hochstrompfad zwischen dem ersten externen Port (P1) und dem positiven Anschluss (B+) ausgebildet ist;
**dadurch gekennzeichnet, dass**
die Batterie einen ersten Schalter (30), um einen positiven Anschluss einer Einheitszelle (C1) und ein Ende der Packsicherung (20) elektrisch miteinander zu verbinden, und einen zweiten Schalter (40), um das andere Ende der Packsicherung (20) und einen positiven Anschluss der anderen einen Einheitszelle (C6) elektrisch zu verbinden, aufweist, wobei
die Schalter (30, 40) einen Bypass-Pfad (BP), der einen Strom zwischen der einen Einheitszelle (C1) und der anderen einen Einheitszelle (C6) aus der Vielzahl der Einheitszellen (C1 bis C6) über die Packsicherung (20) in Abhängigkeit vom Innendruck des Batteriemoduls (10) umleitet, ausbilden, wobei jede der Vielzahl der Einheitszellen (C1 bis C6) eine Elektrodenanordnung (11), die den positiven und negativen Anschluss (15, 17) aufweist, und ein Gehäuse (13) zum Aufnehmen der Elektrodenanordnung (11) aufweist, wobei
jeder des ersten und zweiten Schalters (30, 40) eine erste Kurzschlussplatte (30a, 40a), die sich vom Gehäuse (13) erstreckt, um zur Innenseite des Gehäuses (13) hin konvex ausgebildet zu sein, und eine zweite Kurzschlussplatte (30b, 40b), die so angeordnet ist, dass sie der ersten Kurzschlussplatte (30a, 40a) zugewandt ist und von der ersten Kurzschlussplatte (30a, 40a) beabstandet ist, aufweist, und wobei
die erste Kurzschlussplatte (30a, 40a) angepasst ist, um in Abhängigkeit vom Innendruck verformt zu werden, um mit der zweiten Kurzschlussplatte (30b, 40b) physisch in Kontakt zu treten.

2. Die wiederaufladbare Batterie nach Anspruch 1, wobei die Schalter (30, 40) angepasst sind, um in Abhängigkeit des Innendrucks des Batteriemoduls (10) physisch verformt zu werden, um eine elektrische Verbindung zwischen jeder der einen und der anderen einen Einheitszelle (C1, C6) über die Packsicherung (15) auszubilden.

3. Die wiederaufladbare Batterie nach Anspruch 1 oder 2, wobei jede der einen und der anderen einen Einheitszelle (C1, C6) eine Verbindungslasche (19, 21) zum elektrischen Verbinden des Gehäuses (13) und des positiven Anschlusses (15) aufweist.

4. Die wiederaufladbare Batterie nach einem der Ansprüche 1 bis 3, wobei die Batterie einen ersten Schalter (30a), der auf der einen Einheitszelle (C1) ausgebildet ist, und einen zweiten Schalter (40), der auf der anderen einen Einheitszelle (C2) ausgebildet ist, aufweist.

## Revendications

1. Batterie rechargeable comprenant :
un module de batterie (10) configuré pour comporter une pluralité de cellules élémentaires (C1 à C6) connectées en série entre une borne positive (B+) et une borne négative (B-), un premier accès externe (P1) connecté à la borne positive (B+), et une seconde accès externe (P2) connectée à la borne négative (B-) ; et
un bloc fusible (20) formé sur un trajet de courant élevé entre le premier accès externe (P1) et la borne positive (B+) ;
**caractérisée en ce que** :
la batterie comporte un premier interrupteur (30) pour connecter électriquement entre elles une borne positive d'une cellule élémentaire (C1) et une extrémité du bloc fusible (20), et un second interrupteur (40) pour connecter électriquement l'autre extrémité du bloc fusible (20) et une borne positive de l'autre des cellules élémentaires (C6), dans laquelle :
les interrupteurs (30, 40) forment un trajet de dérivation (BP) qui met en dérivation un courant entre l'une des cellules élémentaires (C1) et l'autre des cellules élémentaires (C6) parmi la pluralité de cellules élémentaires (C1 à C6) par le biais du bloc fusible (20) en fonction d'une pression interne du module de batterie (10), dans laquelle :
chaque cellule de la pluralité de cellules élémentaires (C1 à C6) comporte un ensemble électrodes (11) comportant les bornes positive et négative (15, 17), et un boîtier (13) destiné à accueillir l'ensemble électrodes (11), dans laquelle :
chacun des premier et second interrupteurs (30, 40) comporte une première plaque de court-circuit (30a, 40a) qui s'étend à partir du boîtier (13) de manière à présenter une forme convexe vers l'intérieur du boîtier (13), et une seconde plaque de court-circuit (30b, 40b) qui est disposée en regard de la première plaque de court-circuit (30a, 40a) et espacée de la première plaque de court-circuit (30a, 40a), et dans laquelle :
la première plaque de court-circuit (30a, 40a) est adaptée pour se déformer en fonction de la pression interne afin d'être en contact physique avec la seconde plaque de court-circuit (30b, 40b).

2. Batterie rechargeable selon la revendication 1, dans laquelle les interrupteurs (30, 40) sont adaptés pour se déformer physiquement en fonction de la pression interne du module de batterie (10) afin d'établir une connexion électrique entre l'une et l'autre des cellules élémentaires (C1, C6) par le biais du bloc fusible (20).

3. Batterie rechargeable selon la revendication 1 ou 2, dans laquelle l'une et l'autre des cellules élémentaires (C1, C6) comportent une languette de connexion (19, 21) destinée à connecter électriquement le boîtier (13) et la borne positive (15).

4. Batterie rechargeable selon l'une quelconque des revendications 1 à 3, dans laquelle la batterie comporte un premier interrupteur (30a) qui est formé sur l'une des cellules élémentaires (C1), et un second interrupteur (40) qui est formé sur l'autre des cellules élémentaires (C2).
